# EUROPEAN PATENT SPECIFICATION

(11) **EP 2 829 727 B1**
(45) Date of publication and mention of the grant of the patent: **05.09.2018**
(21) Application number: 13177408.5
(22) Date of filing: 22.07.2013
(51) Int. Cl.: F03G 3/08, B61D 43/00, F03G 7/08, H02K 7/18

(54) **Vehicle for the transportation of passengers comprising at least one axle having outer wheels including an energy recovery apparatus**
Personentransportfahrzeug mit mindestens einer Achse mit Außenrädern mit einer Energierückgewinnungsvorrichtung
Véhicule pour le transport de passagers comprenant au moins un essieu possédant des roues externes comprenant un appareil de récupération d'énergie

(43) Date of publication of application: 28.01.2015
(73) Proprietor: IVECO FRANCE S.A.S., 69200 Vénissieux (FR)
(72) Inventor: Gendre, Guy Pierre, 69003 Lyon (FR); Martin, Gérard Jean-Marie, 38200 Vienne (FR)
(74) Representative: Franzolin, Luigi

(56) References cited:
- WO-A1-87/01527
- WO-A1-2004/056590
- WO-A1-2013/100113
- US-A- 4 021 690
- US-A- 5 775 229
- US-B2- 7 562 729

## Description

### Field of the invention

The present invention relates to a vehicle, preferably a bus for the transportation of passengers, which comprises electrical apparatuses for energy recovery. More in detail the invention relates to a vehicle which comprises an operative axle whose outer wheels comprise an energy recovery apparatus housed into the cavity defined by the rim of each wheel.

### Description of the prior art

Over the last years the number of vehicles comprising recovery energy sub-systems is greatly increased. Usually this sub-system are part of an "hybrid driving system" and have been proposed in order to convert the kinetic energy of the vehicle, usually during the braking phase, in electrical energy which can be stored in a battery module. Such electrical energy is subsequently converted in power for the vehicle by means of the hybrid system.

The recovery energy subsystem usually comprise at least two electrical generators, usually working also as electric motors, each of which arranged at one end of the same axle of the vehicle. Each generator comprises a rotor unit operatively connected to the hub of a corresponding wheel and a stator unit which is usually fixed to the axle of the vehicle between an end of the axle and a corresponding wheel. A battery module is connected to the generators in order to store the electrical energy generated by the same generators. In any case the known recovery energy systems are deeply integrated in the structure of the axle which support them at its ends. In particular each of them is located at the internal side of an hub of a corresponding wheel. As a consequence such assembly are not easily reachable from the outside, i.e. when the wheels are mounted. This aspect is particularly critical both for the installing and for maintenance operations.

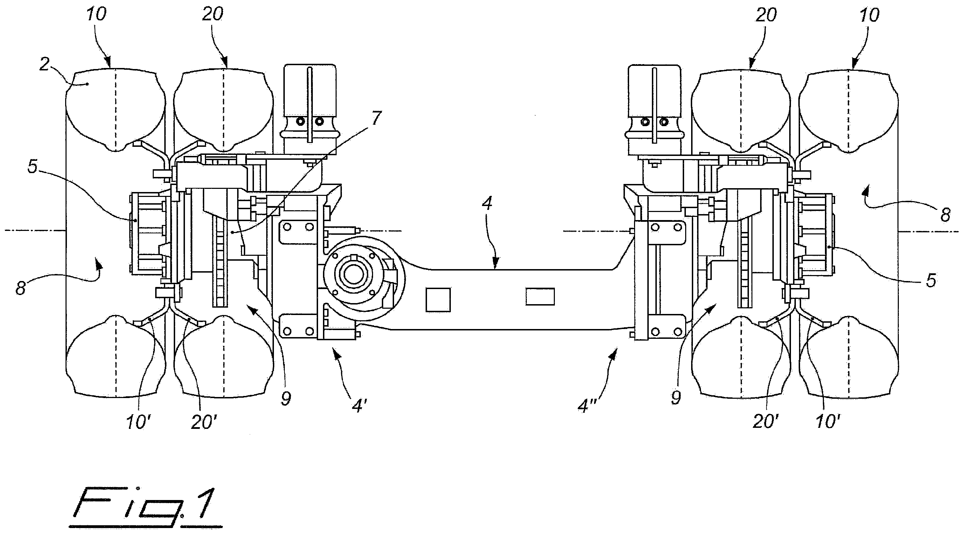

Moreover the installation of these systems affects heavily the design of the vehicle especially when the vehicle (i.e. an industrial vehicle or a vehicle for transportation of passengers) is provided with a couple of twin wheels for each end of a drive axle. On this regard, Figure 1 shows a known embodiment of and axle 4 of a bus for transportation of passengers. Such axle 4 comprises a first couple of twin wheels and a second couple of twin wheels arranged on opposite sides 4', 4'' of the axle 4. For each of said couples of wheels, the rim 10' of the outer wheel 10 is connected to the rim 20' of the inner wheel 20 so as to define a common hub 5 for the two wheels 10, 20 according to a typical arrangement. The rim 20' of the inner wheel 20 defines an inwards space 9 into which a braking device 7 is housed. Such braking device 7 is operatively connected to the hub 5 of the wheels 10, 20 which protrudes outwards in the cavity 8 defined by the rim 10' of the outer wheel 10.

For the embodiment shown in Figure 1, it is clear that the installation of a recovery energy assembly, according to the traditional arrangements, requires a deep re-design of the axle or at least of its ends. As a matter of fact the inner space 9 comprised between the coupled of wheels 10, 20 and the corresponding end 4', 4" of the axle 4 has to be completely re-design also in order to define the space for the battery module and/or for the electrical connection means necessary for the operation of the recovery energy assembly (i.e. electrical connection means, inverter means etc).

Therefore on the basis of what above, it is clear that the traditional recovery energy subsystem traditionally can not easily installed on heavy vehicles especially in those having axles supporting couples of twin wheels. On this regard, also the use of a battery module separated from the stator unit is actually a critical aspect for the installation since it requires a specific space for housing such module as well as specific electrical connections.

The main object of the present invention is to provide an heavy vehicle with recovery energy apparatuses wherein such drawbacks are overcome. Within this object a first purpose of the present invention is to provide a heavy vehicle with recovery energy apparatuses which can be easily installed. Another purpose of the present invention is to provide an heavy vehicle having recovery energy apparatuses which can be easily accessible for the inspection and/or maintenance operations. Not the last purpose of the present is to provide an heavy vehicle for the transportation of passengers which is reliable and easy to manufacture at competitive costs.

WO2004056590 A1 and WO87015257 disclose detection devices for pneumatic pressure coupled to wheel of a vehicle and including means for transforming kinetic energy of a wheel into electric energy to supply to the detection device.

WO2013100113 A1 and US4021690A disclose a vehicle according to the preamble of claim 1.

### Summary of the invention

The present invention is relative to an heavy vehicle, preferably for the transportation of passengers, which comprises at least an operative axle having two opposite ends at each of which at least one wheel is arranged. Said at least one wheel comprises a pneumatic tire supported by a rim which is vertically mounted on a corresponding horizontal hub element. Said rim defines a internal cavity of the wheel which is open outwards. The vehicle according to the invention also comprises at least one energy recovery apparatus for converting the kinetic energy of a corresponding wheel into electric energy.

The vehicle according to the invention is characterized in that the at least one energy recovery apparatus is built as an independent unit adapted to be mounted into or removed from the internal cavity of a corresponding wheel from the outside of said wheel.

Therefore according to the invention and differently from the known solutions, each of the energy recovery apparatuses of the vehicle is arranged into the cavity of a corresponding wheel that is in a position easily accessible for the operators. That means both the installing operations and the maintenance operations can be easily performed. Moreover the energy apparatuses can be easily installed without requiring a customized design of the vehicle. In other words such apparatuses can be installed substantially without changing the design of the vehicle and in case only by adapting a fixed part of the vehicle to interact with the fixed assembly of the apparatus in order to fix its position during the rotation of the moving assembly. In the meaning of this invention, the outside of a wheel means the side of a wheel mounted on one end of the operative axle oriented opposite to the other end of this axle.

According to an advantageous aspect of the invention, the independent unit is mounted on said vehicle via at least two reference points, a first rotatable reference point being formed by said hub element and a second non rotatable reference point being formed by a non-rotatable part of said vehicle.

Advantageously, said energy recovery apparatus comprises energy conversion means and energy storing means.

According to another advantageous aspect of the invention, the vehicle comprises electrical energy conversion means including:
- a moving assembly comprising a rotor unit mechanically and coaxially connected to the corresponding hub element via said first rotatable reference point;
- a fixed assembly comprising at least a stator unit which interacts electromagnetically with said rotor unit for converting the kinetic energy of said rotor into electric energy, said fixed assembly being stably connected to a firm part of said vehicle which forms said second non rotatable reference point to maintain a stable position during the rotation of said rotor unit.

According to another advantageously aspect of the invention, the fixed assembly comprises preferably a containment element which contains electric batteries suitable to store electric energy generated by the interaction of said rotor unit with said stator unit. Therefore according to this aspect the batteries are actually integrated in the structure of the fixed assembly in a position substantially adjacent to the stator unit. That means the energy recovery apparatus is overall more compact and easier to handle with respect to the traditional solutions.

The claims disclose preferred embodiments of the present invention, forming integral part of the present description.

### Brief description of the drawings

The invention will become fully clear from the following detailed description, given by way of mere exemplifying and non limiting examples to be read with reference to the attached drawing figures, wherein:
- Fig. 1 shows an axle of a known vehicle comprising an axle and a couple of twin wheels for each end of the axle itself;
- Fig. 2 is a schematic view of a first embodiment of an energy recovery apparatus of a vehicle, according to the invention;
- Fig. 3 is a schematic view of a second embodiment of an energy recovery apparatus of a vehicle according to the invention;
- Fig. 4 and 5 are schematic view showing an installing method of an electrical assembly for recovery energy of a vehicle according to the invention;
- Figure 6 is a schematic view of an electrical assembly according to the invention;
- Figure 7 is a schematic view, similar to figure 3, of a third embodiment of an energy recovery apparatus of a vehicle, according to the invention.

The same reference numerals and letters in the figures designate the same or functionally equivalent parts.

### Detailed description of the preferred embodiments

With reference to the figures, the vehicle according to the present invention comprises an operative axle 4 having two opposite ends at each of which at least one wheel is arranged. In detail at least an outer wheel 10 is arranged on a first end of the axle 4 and at least a second wheel arranged on a second end, opposite to the first end, of the same axle. Each of said wheel is vertically mounted on a corresponding hub element and comprises a pneumatic tire 2 supported by a rim. The latter defines a internal cavity of the wheel which is open outwards of the vehicle according to a typical arrangement.

The vehicle according to the invention also comprises a energy recovery apparatus 1 for each of the ends of the operative axle 4 of the vehicle. Said apparatus is provided for converting the kinetic energy of a corresponding wheel into electric energy. In particular at least one apparatus is provided for the first wheel, while a second apparatus is provided for the second wheel of said operative axle 4. Therefore for the purpose of the present invention the expression "operative axle" wants to indicate an axle of the vehicle comprising wheels to which an energy recovery apparatus is operatively related.

Each energy recovery apparatus 1 includes a moving assembly and a fixed assembly and it is advantageously arranged in the cavity of a corresponding wheel defined by its rim as above indicated. More in detail, the moving assembly comprises at least a rotor unit 40 mechanically and coaxially connected to a hub element 5 which support a corresponding wheel. The fixed assembly 50 comprises a stator unit which interacts electromagnetically with the rotor unit 40 of the moving assembly for converting the kinetic energy of the rotor into electric energy. Further the fixed assembly is stably connected to a fixed part of the vehicle in order to maintain a firm position during the rotation of the rotor unit.

The fixed assembly 50 preferably comprises also a containment element in which electric batteries 58 are housed for storing the electric energy generated by the interaction of the rotor unit 40 with the said stator unit 50. Further the fixed assembly is stably connected to a fixed part of the vehicle in order to maintain a firm position during the rotation of the rotor unit.

The moving assembly, which includes the rotor unit 40, and the fixed assembly 50 together for an independent unit U which constitutes energy recovery apparatus 1 and can be mounted in operation within cavity 8 of a corresponding outer wheel 10. Such a unit U can also easily be removed from cavity 8 in one operation. Items 40 and 50 are held together in translation along axis 100 thanks to the magnetic coupling effect obtained via the magnets 48 and the windings 55.

The main advantage of the present invention can be found in the arrangement of each energy recovery apparatus 1 into the cavity 8 of a corresponding outer wheel 10. It has to be noted that in the case of a vehicle for the transportation of passengers, the size of the wheels is such that the internal volume of the cavity 8 defined by the rim reaches almost 50 liters. According to the invention, and differently from the known solution, this considerable volume is now exploited to house an energy recovery apparatus 1 which is formed as an independent unit U and, as a matter of fact, can be installed without changing the design of the rest of the vehicle. This arrangement of the apparatus makes easier the installation operations as well as the eventual replacement of the apparatus itself. In particular, differently from the known solutions, the installation of the energy recovery apparatus 1 can be advantageously performed after the installation of the wheels at the ends of the operative axle. Analogously, in the case, the energy recovery apparatus can be uninstalled, that is removed from cavity 8, without removing the wheels.

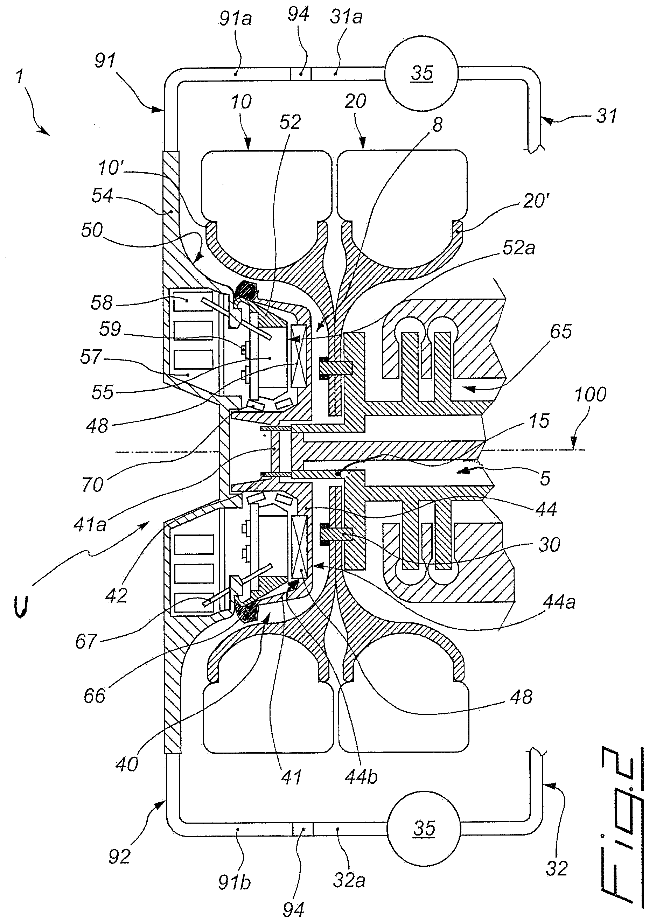

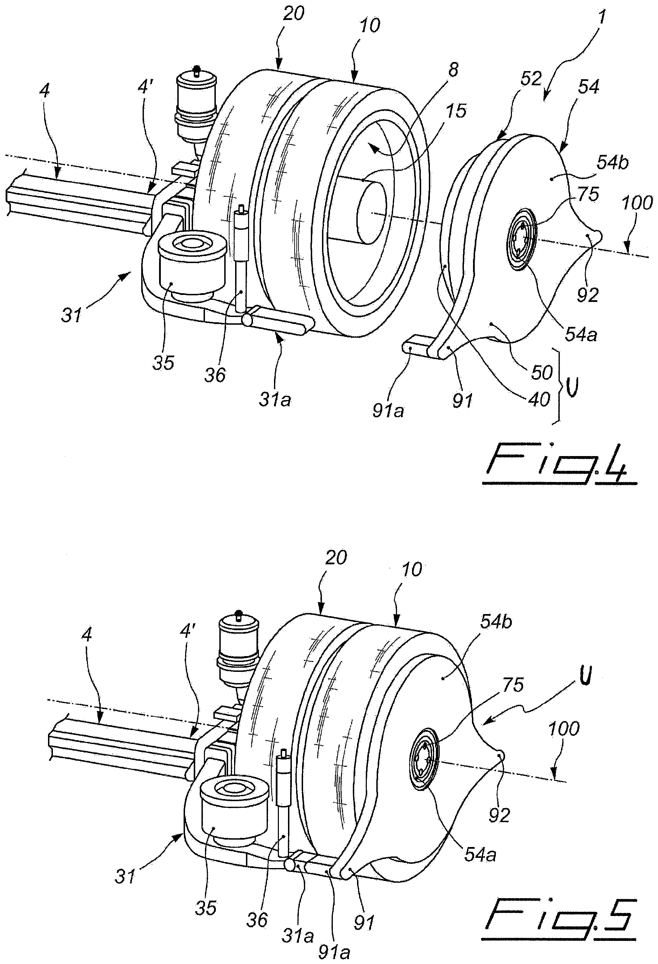

Figure 2 is relative to a first possible embodiment of an energy recovery apparatus of a vehicle according to the invention; in particular Figure 2 is a section view according to an horizontal section plane which contain the rotation axis 100 of the wheels 10,20. Instead Figures 4 and 5 are schematically figures showing a possible installation mode of the energy recovery apparatus of Figure 2.

In particular Figures 4 and 5 show a portion of an operative axle 4 of the vehicle according to the invention. Such axle 4 comprises a first end 4' at which a first couple of twin wheels 10, 20 is installed and a second end (non shown) at which a second couple of twin wheels (not shown) is installed. Each couples of wheels comprises an inner wheel 20 and an outer wheel 10 whose rims 10', 20' are reciprocally connected so that the wheels can rotate together according to a typical arrangement.

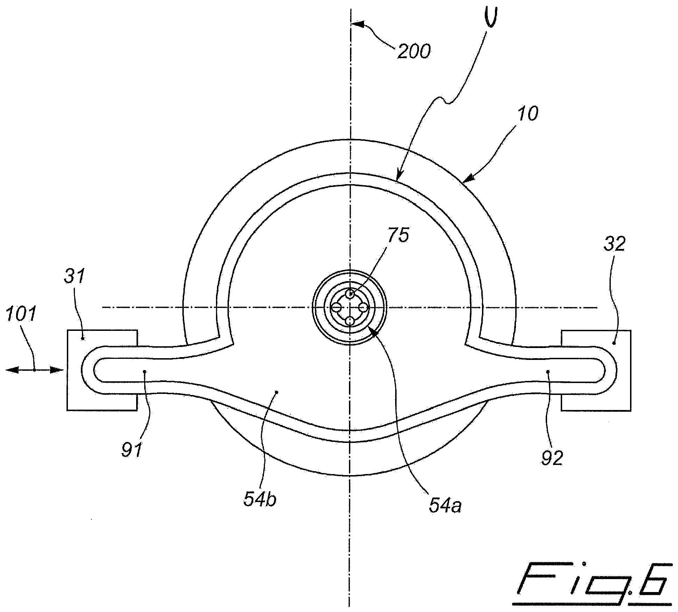

For each of its ends, the operative axle 4 carriers a suspension assembly in order to allow relative movements of the vehicle with respect to the operative axle 4, i.e. with respect to the couples of wheels 10,20 installed at the ends of the axle 4. More in detail a first suspension assembly is installed on the operative axle 4 in a position close to a first end while a second suspension assembly (not shown) is installed in a position closed to said second end (not shown). Each suspension assembly comprises a first supporting arm 31 and a second supporting arm 32 which are installed on/supported by the operative axle 4. In particular the first arm 31 and the second arm 32 extend on opposite sides with respect to a vertical reference plane 200 which contains the rotation axis 100 of the wheels 10,20 supported by the operative axle 4 (see Figure 6).

As illustrated schematically in the figures 2, 4 and 5, the arms 31, 32 hold up damping means such as, for example, an air suspension element 35 and/or an damping element 36. Preferably the arms 31, 32 of the suspension assembly develop symmetrically with respect to the above vertical reference plane 200 containing the rotation axis 100. In particular the suspension arms 31, 32 have preferably a L-shaped so that each arm 31,32 has a portion 31a, 32a protruding outwards, as shown in Figures 4 and 5, substantially parallel to the rotation axis 200.

According to a preferred embodiment shown in Figure 6, the stator assembly 50 of the energy recovery apparatus 1 comprises an outer wall 54b which is shaped so as to close outwards the internal cavity 8 of the outer wheel 10. That means the rest of the stator assembly and the rotor assembly are substantially comprised between said outer wall 54b and the rim 10' of the outer wheel 10. As illustrated in Figure 6, said outer wall 54b preferably comprises a first lateral extension 91 and a second lateral extension 92 which develop symmetrically with respect to the vertical reference plane 200 above indicated containing the rotation axis 100 of the wheels 10,20. In particular said lateral extension 91, 92 extend along a longitudinal direction 101 (indicated in Figure 6) of the vehicle which is substantially orthogonal to said vertical reference plane 200.

Always according to said preferred embodiment, the first lateral extension 91 is mechanically connected to the first arm 31 of the arm of the suspension assembly, while the second lateral extension 92 is mechanically connected to the second arm 31 of the same suspension assembly. In other words the suspension arms 31, 32 are advantageously exploited for fixing the static assembly 50 of the energy recovery apparatus through a mechanical connection with said lateral extensions 91,92. This solution is particularly advantageous since it does not require a deep customized re-design of the vehicle, but in the case only a slight modification of the ends of the supporting arms 31,32 in order to perform the connection with the suspension arms 31,32.

As above indicated, Figure 2 shows a first embodiment of an energy recovery assembly according to the present invention. The rim 10' of the outer wheel 10 is mechanically connected to the rim 20' of the inner wheel 20 by means of connecting elements 30 so that the wheels 10,20 are reciprocally connected and supported on a hub element 5. The latter is connected to a corresponding end of the operative axle (not shown in Figure 2) and comprises an external portion 15 which protrudes outwards into the cavity 8 defined by the rim 10' of the outer wheel 10 according to a typical arrangement. As illustrated, for each couple of wheels 10,20 the vehicle can comprise a braking assembly 65 which can act on a inner part of the corresponding hub element 5 so as to control the rotational speed of the wheels 10,20.

Always with reference to Figure 2, as above indicated the moving assembly of the energy recovery apparatus 1 includes a rotor unit 40 mechanically and coaxially connected to the external portion 15 of the hub element 5 by means of connecting elements 42 such as, for example, axial studs. More in detail the rotor unit 40 includes a body 41 comprising a central portion 41a stably fixed to the hub element 5 by means of said connecting elements 42 so as to have the same rotation axis 100 of the wheels 10,20. The body 41 comprises a disc-shaped portion 44 which develops radially from the central portion 41a. Such shaped portion 44 comprises an inner surface 44a which faces the rib 10' of the outer wheel 10 and an outer surface 44b opposite to said inner surface 44 and facing outwards. The rotor unit 40 comprises a plurality of magnets 48 arranged circumferentially on the outer surface 44b according to an arrangement typical, for example, of an electrical generator. The fixed assembly 50 of the energy recovery apparatus 1 comprises a stator unit and a containment unit which includes respectively a first body 52 and a second body 54. The first body 52 has a annular shape and it is supported by the central portion 41a of the body 41 of the rotor unit 40 by means of bearing elements 70 which allow the rotation of the rotor unit 40 independently from the first body 52.

The latter comprises an operative surface 52a which faces to the outer surface 44b of the body 41 of the rotor unit 40. The first body 52 of the stator unit 50 comprises a plurality of stator windings 55 which are arranged circumferentially so as to interact magnetically with the magnets 48 arranged on the body 41 of the rotor unit 40 for generating electric energy stored into electric batteries 8.

On this regard, the containment element of the static assembly (i.e. the second body 54) defines an internal housing 57 into which said of electric batteries 58 are placed. Such batteries 58 are electrically connected to the stator windings 55 by means of electrical connections 59 in order to store electrical energy during a first operation mode of the energy recovery apparatus and in order to supply the stator windings 55 during a second operation mode of the same apparatus. The energy recovery apparatus 1 preferably comprises also control means in order to activate/deactivate the electrical interaction between the rotor unit 40 and the stator unit 52 and for switching the operation mode of the apparatus 1. On this regard the first operative mode is activated during the deceleration phase of the vehicle 1, for example when the disc brake assembly 65 is activated. Instead the second operation mode is advantageously activated for the acceleration phase of the vehicle.

With reference again to Figure 2, preferably between the first body 52 and the second body 54 of the stator assembly an extractor element 67 is installed to allow the separation of the bodies (52, 54) in order to allow the maintenance operations. Further an annular sealing element 66 is arranged between the first body 52 and the internal surface of the rim 10' of the outer wheel 10.

As indicated above, Figure 6 shows the energy recovery apparatus 1 after its installation as a unit U on a vehicle according to the invention. In detail the second body 54 of the static assembly has a central region 54a which comprises some openings 75 for the connection of the moving assembly and of the static assembly to the hub element 5 of the wheels 10,20. As shown in Figure 6, the second body 54 defines an outer wall 54b substantially disc shaped so as to cover the internal cavity of the outer wheel 10 defined by the corresponding rim 10'. Accordingly to an aspect of the invention already indicated, the outer wall 54b comprises a first lateral extension 91 and a second lateral extension 92 which develop symmetrically with respect to the vertical reference plane 200. Such extensions are stably connected respectively to the first arm 31 of the arm and to the second arm 32 of a corresponding suspension assembly as schematically indicated in Figure 6. From this figure it is possible to observe that the lateral extensions 91,92 are actually provided for fixing the static assembly 50 of the engine recovery apparatus 1 at two points of the vehicle (the supporting arms 31, 32) which are opposite each other with respect to a vertical plane 200 containing the rotation axis 100 of the wheels. This solution allows to stabilize the position of the stator assembly. In other words the position of the stator assembly (i.e. the two bodies 52, 54) is substantially centered on the rotor assembly by means of the bearings elements 70, while the lateral extensions 91, 92 act as stabilizers of the torque on the central axis 200.

With reference newly to Figure 2, both the first lateral extension 91 and the second lateral extension 92 comprise an end portion 91a, 92a which protrudes inwards so as to be substantially parallel to the rotation axis 100. Each of said end portions 91a, 92a is connected to the end portion 31a,32a of a corresponding supporting arm 31, 32 of the suspension assembly. On this regard, the Figures 4 and 5 show schematically the connection between the first lateral extension 91 with the first arm 31 of the suspension assembly of the vehicle. With reference to Figure 5, such connection can be performed by providing removable connection means 94 (also indicated in Figure 2) so as to allow the removal of the stator assembly, i.e. of the energy recovery apparatus, from the internal space of the outer wheel 10.

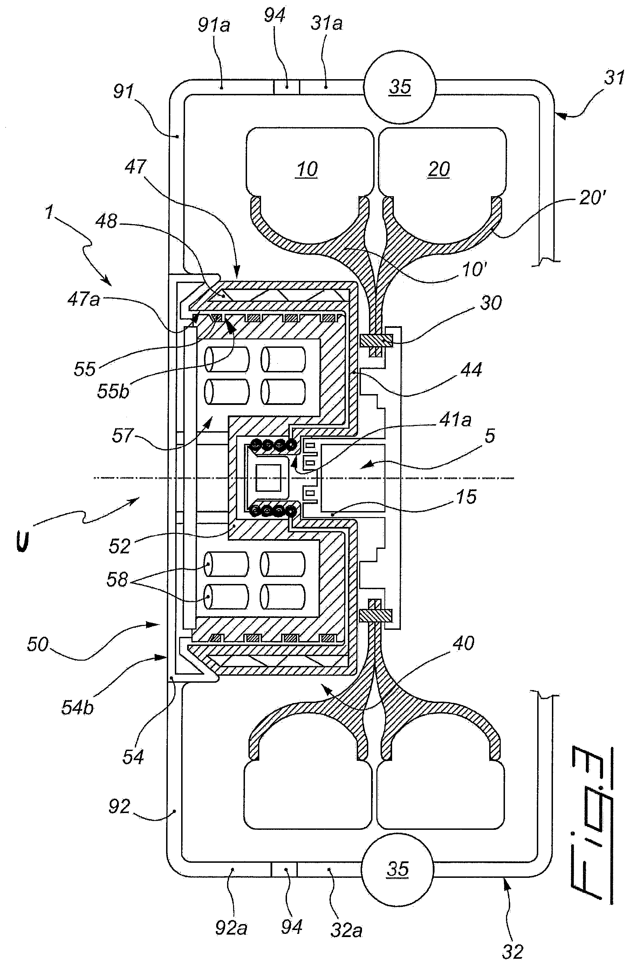

Figure 3 shows a second possible embodiment of an energy recovery apparatus 1 according to the invention. In particular according to this second embodiment the rotor unit 40 of the moving assembly and the first body 52 (i.e. stator unit) of the stator assembly are shaped accordingly to an "axial electric motor" configuration. Here again, items 40 and 50 form together an independent unit U which constitutes energy recovery apparatus 1 and can be manipulated as one part in order to be mounted into cavity 8 or removed from this cavity. More in detail, also in this case, the rotor unit 40 comprises a central portion 41a stably fixed to the hub element 5 of the wheels 10,20 by means of a axial stud or equivalent elements. The rotor unit 40 comprises a body having a radial portion 43 which support an axial portion 47. The latter develops like a ring around the rotation axis 100 of the wheels 10,20, i.e. the rotation axis of the rotor unit 40, by comprising an inner cylindrical surface 47a facing the central portion 41.

Such axial portion 47 holds up magnets 48 which are suitable to interact electrically with the windings 55 provided on the stator assembly 50. The latter comprises a first body 52 which is supported by the central portion of the rotor unit 40 by means of bearing elements 70, such as for example ball bearings or equivalent means. The first body 52 of the static assembly has an annular shape by comprising a cylindrical surface 52a which faces the inner cylindrical surface 47a of the axial portion 47 of the rotor unit 40.

The cylindrical surface 52a of the first body 52 comprises electrical windings 55 (stator windings) arranged in annular grooves 55b. Further the first body 52 of the static assembly defines an internal housing 57 wherein a plurality of batteries 58 are located to be electrically connected to the electrical windings 55 above indicated.

The stator assembly 50 also comprises a second body 54 comprising an outer wall 54b having substantially the same technical features above disclosed with reference to the embodiment in Figure 2. Indeed also in this case the outer wall 54b preferably comprises two lateral extension 91, 92 which develops according to opposite direction and which comprises a inwards end portion 91a,92a having an inward portion 91a,92a suitable to be mechanically connected to a end portion 31a, 32a of a corresponding supporting arm 31, 32 of the suspension assembly.

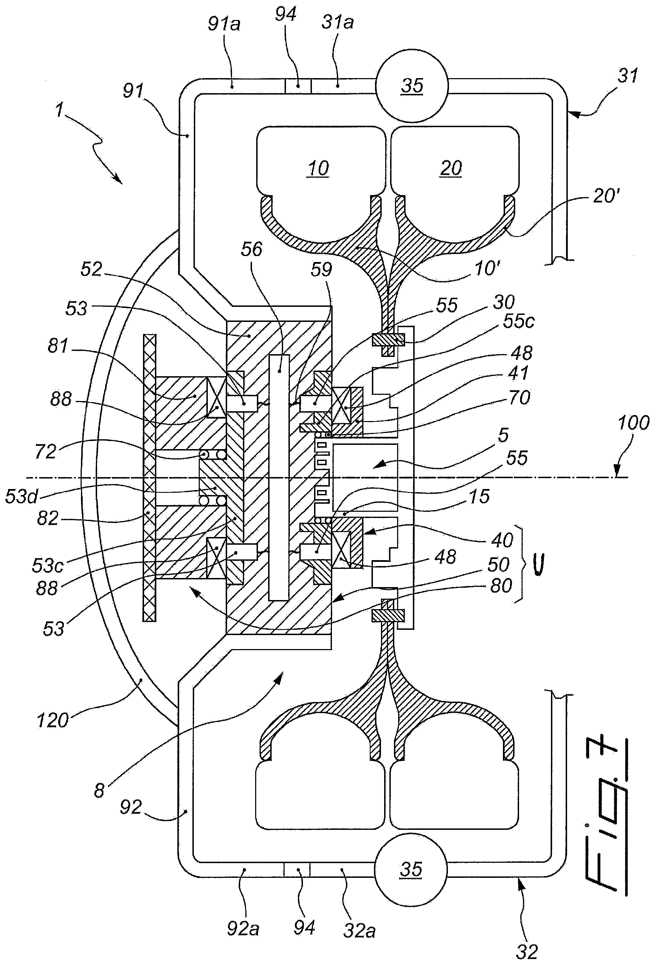

Figure 7 shows a third possible embodiment of an energy recovery apparatus 1 according to the invention. In the description of this embodiment, elements similar to the ones of the first two embodiments have the same references. Hereafter, mainly the differences between this third embodiment and the second embodiment are described.

According to this third embodiment, a rotor unit 40 is mounted on the external portion 15 of hub element 5. This rotor unit includes a body 41 fixedly connected to external portion 15 and a set of primary magnets 48.

Energy recovery apparatus 1 also includes a fixed assembly 50 which is rotatively supported around external portion 15 via a bearing 70 represented on figure 7 by a double row of balls. As in the first and second embodiments, fixed assembly 50 includes several first windings 55 regularly distributed around the rotation axis 100 of hub 5. Each winding 55 is supported by a support member 55c which is housed within a body 52 of fixed assembly 50.

Body 52 is rigidly connected to two lateral extensions 91 and 92 which extend on either side of a plane defined as plane 200 for the first embodiment. The end portions 91a and 92a of lateral extensions 91 and 92 are respectively connected, via connection means 94, to end portions 31a and 32a of two supporting arms 31 and 32 similar to the ones of the first two embodiments. Supporting arms 31 and 32 hold an air suspension element 35 and a non represented damping element. Thus, as in the first and second embodiments, fixed assembly 50 is supported with respect to the frame of the vehicle, without interacting with the wheels 10 and 20 and their rims 10' and 20'.

An inertial unit 80 is mounted on fixed assembly 50 and rotative around axis 100. Alternatively, inertial unit can rotate around an axis different from axis 100.

Along axis 100, inertial unit 80 is located, with respect to fixed assembly 50, opposite to rotor unit 40. In other words, unit 40 and 80 are located on either sides of fixed assembly 50 along axis 100.

A bearing element 72, represented by two rows of balls, is located between fixed assembly 50 and inertial unit 80.

Inertial unit 80 includes a body 81 which accommodates several permanent magnets 88 oriented towards body 52. A flywheel 82 is rigidly mounted onto body 81 and rotates with items 81 and 88 around axis 100, with respect to fixed assembly 50.

Fixed assembly 50 also includes second windings 53 aligned with magnets 88 along directions parallel to axis 100. Each second winding 53 is held in position by a respective support member 53c similar to a support member 55c. Each support member 53c has an axial extension 53d and these extensions 53d together form a nose portion of fixed assembly 50 around which bearing element 72 is mounted, in order to rotatively support inertial unit 80.

First windings 55 and second windings 53 are respectively connected, via electrical connection lines 59, to an electrical convertor 56 which is housed in body 52.

Rotor unit 40, fixed assembly 50 and inertial unit 80 together form an independent unit U which is adapted to be mounted into or removed from an internal cavity 8 of the outer wheel 10 as a sub-assembly, which can be easily manipulated. As shown on figure 7, unit U can be partially received within cavity 8. According to a non represented embodiment of the invention, unit U can be totally received within cavity 8.

A cover plate 120 is fixed onto lateral extensions 91 and 92 and isolates unit U and cavity 8 from the outside. In particular, cover plate 120 prevents direct access to flywheel 82, which can rotate at high speed.

During a deceleration phase of the vehicle, external portion 15 of hub element 5 drives body 41 and magnets 48 in rotation. Since magnets 48 are aligned, along directions parallel to axis 100, with first windings 55, this induces an electrical current within each of these windings and this current is transmitted by electrical connection lines 59 to convertor 56. Convertor 56 converts this current by increasing its frequency. Actually, the frequency of the current received from first windings 55 depends on the rotation speed of hub 5, which can be less than 500 rpm, for example of the order of 400 rpm.

In this deceleration phase, rotor unit 40 and fixed assembly 50 work as an electric generator.

The current generated in this deceleration phase is transmitted by convertor 56 to windings 53 which generates a rotating electrical field driving magnets 88 in rotation around axis 100. This drives the totality of inertial unit 80 in rotation around axis 100. The frequency of the electric current delivered by inverter 56 to second windings 53 can be adapted in order to generate, within windings 53, a rotating electrical field with a rotation speed in the range of 15 000 rpm. Thus, fly wheel 82 is driven in rotation, at a high speed, and can store a relatively high energy.

In this deceleration phase, fixed assembly 50 and inertial unit 80 work as an electric motor.

On the other hand, when it is necessary to use the energy stored by flywheel 82, in order to accelerate hub 5 or to keep its rotating speed at a certain level, inertial unit 80 and fixed assembly 50 work as an electric generator and the electric current generated in second windings 53 is transmitted to convertor 56 which feeds first windings 55 with an electric current at a lower frequency. Under such circumstances, rotor unit 40 and fixed assembly 50 work as an electric motor to drive external portion 15 in rotation around axis 100.

Convertor 56 increases the current frequency when it feeds second windings 53 with an electric current received from first windings 55 and lowers the current frequency when it feeds first windings 55 with an electric current received from second windings 53.

In the embodiment of figure 7, fly wheel 82 is driven by an electric generator/motor formed by items 53, 55 and 56 housed in fixed assembly 50. According to an alternative embodiment, which is not represented, flywheel 82 can be driven by a mechanical energy convertor.

In a phase when hub 5 rotates at a stabilized speed, energy recovery apparatus 1 is put to a neutral state. Windings 53 and 55 are short-circuited, so that electrical converter 56 does not have any current to convert.

In all embodiments, the independent unit U is mainly suspended on the hub 5, which forms a first reference point for holding rotor unit 40 along axis 100 and centering fixed assembly 50 in this axis. Alternatively the independent unit U could be fixed/suspended to the rim of the wheel. In such case the rim could form a first reference point of fixation of the independent unit U.

The two end portions 31a and 32a work as anti-rotation stops for fixed assembly 50 and do not have to block fixed assembly 50 axially along axis 100, since fixed assembly is held axially in position on hub 5 via rotor unit 40.

With reference again to Figure 4 and 5, for the three embodiments above disclosed the installation of the energy apparatus can be easily performed. Indeed the rotor assembly and the stator assembly can be mounted together on the protruding portion 15 of the hub. More specifically, as above indicated, the rotor assembly is directly connected to said protruding portion 15 by the connection elements 42, while the stator assembly is mounted on the rotor assembly by the bearing element (not shown in figures 4 and 5). As a matter of fact the energy recovery apparatus can be easily mounted according to a modality similar to that normally used to install a cover wheel.

As above indicated the energy recovery apparatus 1 can be installed advantageously after the installation of the wheels 10,20 on the operative axis 4. For what concerns the maintenance operations the second body 54 of the stator assembly could be separated from the first body 52 without uninstalling the rotor assembly. As a matter of fact, the position of the apparatus 1 inside the cavity 8 of the outer wheel 10 makes easier the inspection operations as well as the eventual replacement of the apparatus.

According to another non-represented embodiment of the invention, the energy recovery apparatus 1 of the invention can be powerful enough to work as an efficient brake for the vehicle. In such a case, breaking assembly 65 can be omitted on operative axle 4. For safety reasons, another breaking assembly can be provided on another axle of the vehicle.

The invention is particularly advantageous when used with a bus or another heavy vehicle for the transportation of passengers. However, the invention can also with trucks, lorries, cranes and, generally speaking, any kind of heavy vehicle.

## Claims

1. Vehicle for the transportation of passengers, said vehicle comprising:
- at least one operative axle (4) having two opposite ends at each of which at least one outer wheel (10) is arranged, each outer wheel (10) comprising a pneumatic tire (2) supported by a rim (10') which is vertically mounted on a corresponding horizontal hub element (5), said rim (10') defining a internal cavity (8) of the outer wheel (10) which is open outwards;
- at least one energy recovery apparatus (1), suitable to convert the kinetic energy of a corresponding outer wheel (10) into electric energy, at least energy recovery apparatus (1) is built as an independent unit (U) adapted to be mounted into or removed from said internal cavity of a corresponding wheel (10) from the outside of said wheel
wherein said independent unit (U) is mounted on said vehicle via at least two reference points, a first rotatable reference point being formed by said hub element (5) or by said rim (10') of said wheel, and a second non rotatable reference point being formed by a non-rotatable part (31a,32a) of said vehicle
wherein said vehicle comprises electrical energy conversion means including:
- a moving assembly comprising a rotor unit (40) mechanically and coaxially connected to the corresponding hub element (5) via said first rotatable reference point;
- a fixed assembly (50) comprising at least a stator unit (52) which interacts electromagnetically with said rotor unit (40) for converting the kinetic energy of said rotor (40) into electric energy, said fixed assembly (50) being stably connected to a firm part of said vehicle which forms said second non rotatable reference point to maintain a stable position during the rotation of said rotor unit (40).
wherein said fixed assembly comprises a containment element (54) which contains electrical energy storing means in form of electric batteries (58) suitable to store electric energy generated by the interaction of said rotor unit (40) with said stator unit (52) wherein for each end of said operative axle (4), said vehicle comprises a suspension assembly which includes suspension arms (31,32) and wherein said second non rotatable reference point is defined by a connection (31a,32a) of said independent unit with one of said suspension arms (31,32) of the corresponding suspension assembly
**characterized in that** for each of said ends of said operative axle (4), said vehicle comprises a suspension assembly which includes a first suspension arm (31) and a second suspension arm (32) and wherein said fixed assembly comprises an outer wall (54b) comprising a first lateral extension (91) and a second lateral extension (92) which are mechanically connected respectively to said first suspension arm (31), by defining said second non rotatable reference point (31a), and to said second suspension arm (32) of said suspension assembly so as to define a third non rotatable reference point (32a).

2. Vehicle according to claim 1, wherein said first and second suspension arms (31,32) of said suspension assembly develop symmetrically with respect to a reference vertical plane (200) containing the rotation axis (100) of said wheel, and wherein said first lateral extension (91) and said second lateral extension (92) of said stator assembly of said energy recovery apparatus (1) develop symmetrically with respect to said reference vertical plane (200).

3. Vehicle according to any of the preceding claims, wherein said lateral extension (91, 92) of said outer wall (54b) of said stator assembly (50) is connected to a corresponding suspension arm (31,32) of said suspension assembly by means of removable connecting means (94) .

4. Vehicle according to any one of the preceding claims,, wherein said rotor unit (12) of said moving assembly (40) comprises a body (41) which includes a central portion (41a) stably fixed to a corresponding hub element (5) by means of connecting element (42), said body (41) further comprising a disc shaped portion (44) which develops radially from said central portion (41a), said disc shaped portion (44) comprising an inner surface (44b) facing the rib (10') of the outer wheel (10) and an outer surface (44b) facing outwards and opposite to said inner surface, said rotor unit (40) comprising a plurality of magnets (48) arranged circumferentially on said outer surface (44b).

5. Vehicle according to claim 4, wherein the stator unit and the containment unit comprise respectively a first body (52) and a second body (54) which are connected each other, said first body (52) being supported by said central portion (41a) of said body of said rotor unit (12) by means of bearing elements (70), said first body (52) comprising an operative surface (52a) which faces the outer surface(44b) of the rotor unit (12), said stator unit comprising a plurality of stator windings (55) arranged through said first body (52) so as to interact electromagnetically with said magnets (48) of said rotor unit (12).

6. Vehicle according to claim 5, wherein said second body (54) defines an internal housing (57) wherein said electric batteries (58) are arranged, said batteries (58) being electrically connected to said stator windings (55) by means of electrical connections (59).

7. Vehicle according to any one of any of the preceding claims,, wherein said rotor unit (12) of said moving assembly (40) comprises a body which includes a central portion (41a) stably fixed to a corresponding hub element (5) by means of connecting element (42), said body further comprising a radial portion (43) which develops radially from said central portion (41a), said radial portion (43) supporting an axial portion (47) comprising an inner cylindrical surface (47a), said rotor unit (40) comprising a plurality of magnets (48) arranged circumferentially on said inner cylindrical surface (47a) of said axial portion (47).

8. Vehicle according to claim 7, wherein said the stator unit comprises a first body (52) which is supported by said central portion (41a) of said body of said rotor unit (40) by means of bearing elements (70), said first body (52) comprising a cylindrical surface (52a) facing said inner cylindrical surface (47a) of said axial portion (47) of said rotor unit (40), said stator unit comprising a plurality of stator windings (55) arranged on said cylindrical surface of said first body (52) so as to interact electromagnetically with said magnets (48) of said rotor unit (12).

9. Vehicle according to claim 7, wherein said first body (54) of said fixed assembly defines an internal housing (57) wherein said electric batteries (58) are arranged, said batteries (58) being electrically connected to said stator windings by means of electrical connections (59).

## Patentansprüche

1. Personentransportfahrzeug, umfassend:
■ mindestens eine Nutzachse (4) mit zwei gegenüberliegenden Enden, wobei an jedem dieser Enden mindestens ein äußeres Rad (10) angeordnet ist, wobei jedes äußere Rad (10) einen Luftreifen (2) umfasst, welcher durch eine Felge (10') gestützt wird, die vertikal an einem dazugehörigen horizontalen Nabenelement (5) angebracht ist, wobei die Felge (10') eine innere Aussparung (8) des äußeren Rads (10) definiert, welche nach außen geöffnet ist;
▪ mindestens einen Energierückgewinnungsapparat (1), geeignet, die kinetische Energie eines entsprechenden äußeren Rads (10) in elektrische Energie umzuwandeln, wobei zumindest der Energierückgewinnungsapparat (1) als unabhängige Einheit (U) ausgebildet ist, angepasst, um von außerhalb des Rads in der inneren Aussparung (8) des entsprechenden Rads (10) angebracht oder von dort entfernt zu werden,
wobei die unabhängige Einheit (U) über mindestens zwei Referenzpunkte an dem Fahrzeug angebracht ist, nämlich einem ersten drehbaren Referenzpunkt, der durch das Nabenelement (5) oder die Felge (10') des Rads gebildet wird, und einem zweiten nicht-drehbaren Referenzpunkt, der durch ein nicht-drehbares Teil (31a, 32a) des Fahrzeugs gebildet wird.
wobei das Fahrzeug Mittel zur Konvertierung elektrischer Energie umfasst, welche folgendes beinhalten:
▪ eine bewegliche Anordnung, die eine Rotoreinheit (40) umfasst, welche mechanisch und koaxial über den ersten drehbaren Referenzpunkt mit dem entsprechenden Nabenelement (5) verbunden ist;
▪ eine fixierte Anordnung (50), die mindestens eine Statoreinheit (52) umfasst, welche elektromagnetisch mit der Rotoreinheit (40) zur Konvertierung der kinetischen Energie des Rotors (40) in elektrische Energie wechselwirkt, welche fixierte Vorrichtung (50) stabil mit einem festen Teil des Fahrzeugs verbunden ist, welches den zweiten nicht drehbaren Referenzpunkt bildet, um eine stabile Stellung während der Rotation der Rotoreinheit (40) beizubehalten,
wobei die fixierte Anordnung ein Behälterelement (54) umfasst, welches Speichermittel für elektrische Energie in Form von elektrischen Batterien (58) enthält, die geeignet sind, elektrische Energie zu speichern, die durch die Wechselwirkung der Rotoreinheit (40) mit der Statoreinheit (52) erzeugt wird, wobei das Fahrzeug für jedes Ende der Nutzachse (4) eine Aufhängungsanordnung umfasst, welche Aufhängungsarme (31, 32) beinhaltet, wobei der zweite nicht drehbare Referenzpunkt definiert ist durch eine Verbindung (31a, 32a) der unabhängigen Einheit mit einem der Aufhängungsarme (31, 32) der entsprechenden Aufhängungsanordnung,
**dadurch gekennzeichnet, dass**
das Fahrzeug für jedes Ende der Nutzachse (4) eine Aufhängungsanordnung umfasst, welche einen ersten Aufhängungsarm (31) und einen zweiten Aufhängungsarm (32) beinhaltet und wobei die fixierte Anordnung eine äußere Wand (54b) umfasst, die eine erste seitliche Erweiterung (91) und eine zweite seitliche Erweiterung (92) umfasst, welche mechanisch jeweils mit dem ersten Aufhängungsarm (31) verbunden ist, wodurch der zweite nicht drehbare Referenzpunkt (31a) definiert wird, und mit dem zweiten Aufhängungsarm (32) der Sperrvorrichtung, sodass ein dritter nicht drehbarer Referenzpunkt (32a) definiert wird.

2. Fahrzeug gemäß Anspruch 1, wobei der erste und zweite Aufhängungsarm (31, 32) der Aufhängungsanordnung symmetrisch bezüglich einer vertikalen Referenzebene (200), die die Rotationsachse (100) des Rads enthält, ausgebildet sind und wobei die erste seitliche Erweiterung (91) und die zweite seitliche Erweiterung (92) der Statorvorrichtung des Energierückgewinnungsapparats (1) symmetrisch bezüglich der vertikalen Referenzebene (200) ausgebildet sind.

3. Fahrzeug gemäß einem der vorhergehenden Ansprüche, wobei die seitliche Erweiterung (91, 92) der äußeren Wand (54b) der Statorvorrichtung (50) mit einem entsprechenden Aufhängungsarm (31, 32) der Aufhängungsanordnung durch entfernbare Mittel verbunden ist.

4. Fahrzeug gemäß einem der vorhergehenden Ansprüche, wobei die Rotoreinheit (12) der beweglichen Anordnung (40) einen Körper (41) umfasst, der einen zentralen Teil (41a) beinhaltet, welcher stabil an einem entsprechenden Nabenelement (5) mittels eines verbindenden Elements (42) fixiert ist, welcher Körper (41) außerdem einen scheibenförmigen Teil (44) umfasst, der sich radial von dem zentralen Teil (41a) erstreckt, welcher scheibenförmige Teil (44) eine innere Oberfläche (44b) umfasst, die der Felge (10') des äußeren Rads (10) zugewandt ist, und eine äußere Oberfläche (44b), welche nach außen und der inneren Oberfläche entgegengesetzt ausgerichtet ist, wobei die Rotoreinheit (40) mehrere Magneten (48) umfasst, die in Umfangsrichtung an der äußeren Oberfläche (44b) angeordnet sind.

5. Fahrzeug gemäß Anspruch 4, wobei die Statoreinheit und die Behältereinheit jeweils einen ersten Körper (52) und einen zweiten Körper (54) umfassen, welche miteinander verbunden sind, wobei der erste Körper (52) durch den zentralen Teil (41a) des Körpers der Rotoreinheit (12) mittels Lageelementen (70) gelagert wird, der erste Körper (52) eine Nutzoberfläche (52a) umfasst, welche der äußeren Oberfläche (44b) der Rotoreinheit (12) zugewandt ist, welche Statoreinheit mehrere Statorwicklungen (55) umfasst, die so an dem ersten Körper (52) angeordnet sind, dass sie elektromagnetisch mit den Magneten (48) der Rotoreinheit (12) wechselwirken.

6. Fahrzeug gemäß Anspruch 5, wobei der zweite Körper (54) ein inneres Gehäuse definiert, in dem die elektrischen Batterien (58) angeordnet sind, wobei die Batterien (58) elektrisch mit den Statorwindungen (55) über elektrische Verbindungsmittel (59) verbunden sind.

7. Fahrzeug gemäß einem der vorhergehenden Ansprüche, wobei die Rotoreinheit (12) der beweglichen Vorrichtung (40) einen Körper umfasst, der einen zentralen Teil (41a) beinhaltet, welcher stabil an einem entsprechenden Nabenelement (5) mittels eines verbindenden Elements (42) fixiert ist, welcher Körper außerdem einen radialen Teil (43) umfasst, der sich radial von dem zentralen Teil (41a) erstreckt, welcher radiale Teil (43) einen axialen Teil (47) lagert, der eine innere Zylinderoberfläche (47a) umfasst, wobei die Rotoreinheit (40) mehrere Magneten (48) umfasst, die in Umfangsrichtung auf der inneren Zylinderoberfläche (47a) des axialen Teils (47) angeordnet sind.

8. Fahrzeug gemäß Anspruch 7, wobei die Statoreinheit einen ersten Körper (52) umfasst, der durch den zentralen Teil (41a) des Körpers der Rotoreinheit (40) durch Lageelemente (70) gelagert wird, der erste Körper (52) eine Zylinderoberfläche (52a) umfasst, die der inneren Zylinderoberfläche (47a) des axialen Teils (47) der Rotoreinheit (40) zugewandt ist, die Statoreinheit mehrere Statorwindungen (55) umfasst, die auf der Zylinderoberfläche des ersten Körpers (52) so angeordnet sind, dass sie elektromagnetisch mit den Magneten (48) der Rotoreinheit (12) wechselwirken.

9. Fahrzeug gemäß Anspruch 7, wobei der erste Körper (54) der fixierten Vorrichtung ein inneres Gehäuse (57) definiert, in der die elektrischen Batterien (58) angeordnet sind, wobei die Batterien (58) elektrisch mit den Statorwindungen über elektrische Verbindungsmittel (59) verbunden sind.

## Revendications

1. Véhicule pour le transport de passagers, ledit véhicule comprenant :
- au moins un essieu opérationnel (4) possédant deux extrémités opposées à chacune desquelles est agencée au moins une roue externe (10), chaque roue externe (10) comprenant un pneumatique (2) supporté par une jante (10') qui est montée verticalement sur un élément formant moyeu (5) horizontal correspondant, ladite jante (10') définissant une cavité interne (8) de la roue externe (10) qui est ouverte vers l'extérieur ;
- au moins un appareil de récupération d'énergie (1), apte à convertir l'énergie cinétique d'une roue externe correspondante (10) en énergie électrique, l'au moins un appareil de récupération d'énergie (1) étant construit en tant qu'unité indépendante (U) adaptée pour être montée dans ou extraite de ladite cavité interne d'une roue correspondante (10) depuis l'extérieur de ladite roue
dans lequel ladite unité indépendante (U) est montée sur ledit véhicule par l'intermédiaire d'au moins deux points de référence, un premier point de référence rotatif étant formé par ledit élément formant moyeu (5) ou par ladite jante (10') de ladite roue, et un deuxième point de référence non rotatif étant formé par une partie non rotative (31a, 32a) dudit véhicule
dans lequel ledit véhicule comprend des moyens de conversion en énergie électrique comprenant :
- un ensemble mobile comprenant une unité formant rotor (40) reliée mécaniquement et coaxialement à l'élément formant moyeu (5) correspondant par l'intermédiaire dudit premier point de référence rotatif ;
- un ensemble fixe (50) comprenant au moins une unité formant stator (52) qui interagit de façon électromagnétique avec ladite unité formant rotor (40) pour convertir l'énergie cinétique dudit rotor (40) en énergie électrique, ledit ensemble fixe (50) étant relié de façon stable à une partie ferme dudit véhicule qui forme ledit deuxième point de référence non rotatif pour maintenir une position stable pendant la rotation de ladite unité formant rotor (40)
dans lequel ledit ensemble fixe comprend un élément de confinement (54) qui contient des moyens de stockage d'énergie électrique sous forme de piles électriques (58) aptes à stocker de l'énergie électrique produite par l'interaction de ladite unité formant rotor (40) avec ladite unité formant stator (52)
dans lequel pour chaque extrémité dudit essieu opérationnel (4), ledit véhicule comprend un ensemble de suspension qui comporte des bras de suspension (31, 32) et dans lequel ledit deuxième point de référence non rotatif est défini par une liaison (31a, 32a) de ladite unité indépendante avec l'un desdits bras de suspension (31, 32) de l'ensemble de suspension correspondant
**caractérisé en ce que** pour chacune desdites extrémités dudit essieu opérationnel (4), ledit véhicule comprend un ensemble de suspension qui comporte un premier bras de suspension (31) et un second bras de suspension (32) et dans lequel ledit ensemble fixe comprend une paroi externe (54b) comprenant une première extension latérale (91) et une seconde extension latérale (92) qui sont reliées mécaniquement respectivement audit premier bras de suspension (31), en définissant ledit deuxième point de référence non rotatif (31a), et audit second bras de suspension (32) dudit ensemble de suspension de manière à définir un troisième point de référence non rotatif (32a).

2. Véhicule selon la revendication 1, dans lequel lesdits premier et second bras de suspension (31, 32) dudit ensemble de suspension se développent symétriquement par rapport à un plan vertical de référence (200) contenant l'axe de rotation (100) de ladite roue, et dans lequel ladite première extension latérale (91) et ladite seconde extension latérale (92) dudit ensemble formant stator dudit appareil de récupération d'énergie (1) se développent symétriquement par rapport audit plan vertical de référence (200).

3. Véhicule selon l'une quelconque des revendications précédentes, dans lequel ladite extension latérale (91, 92) de ladite paroi externe (54b) dudit ensemble formant stator (50) est reliée à un bras de suspension correspondant (31, 32) dudit ensemble de suspension au moyen de moyens de liaison amovibles (94).

4. Véhicule selon l'une quelconque des revendications précédentes, dans lequel ladite unité formant rotor (12) dudit ensemble mobile (40) comprend un corps (41) qui comprend une partie centrale (41a) fixée de manière stable à un élément formant moyeu (5) correspondant au moyen d'un élément de liaison (42), ledit corps (41) comprenant en outre une partie en forme de disque (44) qui se développe radialement à partir de ladite partie centrale (41a), ladite partie en forme de disque (44) comprenant une surface interne (44b) faisant face à la jante (10') de la roue externe (10) et une surface externe (44b) orientée vers l'extérieur et opposée à ladite surface interne, ladite unité formant rotor (40) comprenant une pluralité d'aimants (48) agencés de façon circonférentielle sur ladite surface externe (44b).

5. Véhicule selon la revendication 4, dans lequel l'unité formant stator et l'unité de confinement comprennent respectivement un premier corps (52) et un second corps (54) qui sont reliés entre eux, ledit premier corps (52) étant supporté par ladite partie centrale (41a) dudit corps de ladite unité formant rotor (12) au moyen d'éléments formant roulements (70), ledit premier corps (52) comprenant une surface opérationnelle (52a) qui fait face à la surface externe (44b) de l'unité formant rotor (12), ladite unité formant stator comprenant une pluralité d'enroulements de stator (55) agencés à travers ledit corps (52) de manière à interagir de façon électromagnétique avec lesdits aimants (48) de ladite unité formant rotor (12).

6. Véhicule selon la revendication 5, dans lequel ledit second corps (54) définit un logement interne (57) dans lequel sont agencées lesdites piles électriques (58), lesdites piles (58) étant reliées électriquement auxdits enroulements de stator (55) au moyen de liaisons électriques (59) .

7. Véhicule selon l'une quelconque des revendications précédentes, dans lequel ladite unité formant rotor (12) dudit ensemble mobile (40) comprend un corps qui comporte une partie centrale (41a) fixée de manière stable à un élément formant moyeu (5) correspondant au moyen d'un élément de liaison (42), ledit corps comprenant en outre une partie radiale (43) qui se développe radialement à partir de ladite partie centrale (41a), ladite partie radiale (43) supportant une partie axiale (47) comprenant une surface cylindrique interne (47a), ladite unité formant rotor (40) comprenant une pluralité d'aimants (48) agencés de façon circonférentielle sur ladite surface cylindrique interne (47a) de ladite partie axiale (47).

8. Véhicule selon la revendication 7, dans lequel ladite unité formant stator comprend un premier corps (52) qui est supporté par ladite partie centrale (41a) dudit corps de ladite unité formant rotor (40) au moyen d'éléments formant roulements (70), ledit premier corps (52) comprenant une surface cylindrique (52a) faisant face à ladite surface cylindrique interne (47a) de ladite partie axiale (47) de ladite unité formant rotor (40), ladite unité formant stator comprenant une pluralité d'enroulements de stator (55) agencés sur ladite surface cylindrique dudit premier corps (52) de manière à interagir de façon électromagnétique avec lesdits aimants (48) de ladite unité formant rotor (12).

9. Véhicule selon la revendication 7, dans lequel ledit premier corps (54) dudit ensemble fixe définit un logement interne (57) dans lequel sont agencées lesdites piles électriques (58), lesdites piles (58) étant reliées électriquement auxdits enroulements de stator au moyen de liaisons électriques (59).
